# EUROPEAN PATENT APPLICATION

(11) **EP 1 505 583 A1**
(43) Date of publication of application: **09.02.2005**
(21) Application number: 03723345.9
(22) Date of filing: 13.05.2003
(51) Int. Cl.: G11B 7/24, G11B 7/26, C09J 157/00, C09J 175/14

(54) **OPTICAL DISK AND PROCESS FOR PRODUCING THE SAME**

(30) Priority: 13.05.2002 JP 2002137160
(71) Applicant: Sony Corporation, Tokyo 141-0001 (JP)
(72) Inventor: WATANABE, Hidetoshi, c/o Sony Corporation, Tokyo 141-0001 (JP)
(74) Representative: Müller - Hoffmann & Partner
(86) International application number: PCT/JP2003/005948
(87) International publication number: WO 2003/096329

(57) **Abstract**

There are provided an optical disc that can be made highly-reliable by suppressing the occurrence of drawback such as warp and an optical disc manufacturing method that can make it possible to manufacture a highly-reliable optical disc with excellent work efficiency.

An optical disc 10 is composed of at least two substrates 11 and 15 bonded together with a tacky adhesive layer 14 formed of a film that results from curing an ultraviolet curable resin composition product by thermal crosslinking and ultraviolet crosslinking. Further, when this optical disc 10 is manufactured, the ultraviolet curable resin composition product containing the acrylic resin having the double bond at its side chain, the photopolymerization initiator and the thermal crosslinking agent is half-cured by thermal crosslinking, the thus half-cured ultraviolet curable resin composition product is attached to one substrate 11 and the other substrate 15 is bonded to one substrate 11. Thereafter, the ultraviolet curable resin composition component is cured by thermal crosslinking using irradiation of ultraviolet rays and thereby the tacky adhesive layer 14 for bonding one substrate 11 and the other substrate 15 is formed.

## Description

### TECHNICAL FIELD

The present invention relates to an optical disc in which at least two substrates are bonded together with a tacky adhesive layer and a manufacturing method thereof.

### BACKGROUND ART

While general optical discs in which a film such as a recording layer is formed on a single substrate are now available, there have been proposed an optical disc comprising a plurality of substrates bonded together.

In such optical discs, it has been customary to use an ultraviolet curable resin and a tacky adhesive such as a PSA (Pressure Sensitive Adhesive).

However, if the ultraviolet curable resin is in use, then a thickness of the ultraviolet curable resin tends to be distributed in a wide range, it is easily smudged and it smells very bad. These factors will degrade work efficiency.

Further, the ultraviolet curable resin cannot overcome drawbacks in which it is contracted considerably and is easily warped when cured.

Furthermore, if the tacky adhesive such as the above-mentioned PSA is in use, then creep strength is lowered and hence the tacky adhesive is easily affected by a slide stress and tends to absorb moisture, the resultant optical disc cannot overcome problems such as the occurrence of warping.

In particular, when one of bonded substrates is a thin substrate, the above-mentioned problem arises, in which the optical disc is warped unavoidably.

In order to solve the above-mentioned problems, it is an object of the present invention to provide a highly-reliable optical disc by suppressing the optical disc from being warped and an optical disc manufacturing method capable of manufacturing a highly-reliable optical disc with excellent work efficiency.

### DISCLOSURE OF THE INVENTION

An optical disc according to the present invention is composed of a film in which at least two substrates are bonded together with a tacky adhesive layer, this tacky adhesive layer being formed of a film which results from curing an ultraviolet curable resin composition product containing an acrylic resin having a double bond at its side chain, a photopolymerization initiator and a thermal crosslinking agent by thermal crosslinking and ultraviolet crosslinking.

When an optical disc in which at least two substrates are bonded together with a tacky adhesive layer is manufactured, an optical disc manufacturing method according to the present invention comprises a step of half-curing an ultraviolet curable resin composition product containing an acrylic resin having a double bond at its side chain, a photopolymerization initiator and a thermal crosslinking agent by thermal crosslinking, a process for attaching the ultraviolet curable resin composition product thus half-cured on one substrate, a process for bonding the other substrate to this one substrate and a process for forming a tacky adhesive layer for bonding one substrate and the other substrate by curing the ultraviolet curable resin composition product according to ultraviolet crosslinking using irradiation of ultraviolet rays.

According to the above-mentioned arrangement of the optical disc of the present invention, since the tacky adhesive layer is composed of the film which results from curing the ultraviolet curable resin composition product containing the acrylic based resin having the double bond at its side chain, the photopolymerization initiator and the thermal crosslinking agent by thermal crosslinking and ultraviolet crosslinking, the ultraviolet curable resin composition product is crosslinked at its portion in which it has the double bond at its side chain by ultraviolet crosslinking and other portion (e.g., carboxyl group) is crosslinked by thermal crosslinking. Since different portions of the ultraviolet curable resin composition product are respectively crosslinked by ultraviolet crosslinking and thermal crosslinking, there is constructed a network structure that has been crosslinked in a three-dimensional fashion. Thus, the optical disc becomes difficult to be affected by a slide stress and the tacky adhesive layer becomes difficult to absorb moisture.

According to the above-mentioned optical disc manufacturing method of the present invention, by the process for half-curing the ultraviolet curable resin composition product containing the acrylic resin having the double bond at its side chain, the photopolymerization initiator and the thermal crosslinking agent by thermal crosslinking, it becomes possible to increase strength of the ultraviolet curable resin composition product before it is being irradiated with ultraviolet rays because the ultraviolet curable resin is crosslinked at its other portion (e.g. carboxyl group) than the portion that includes the double bond at its side chain by thermal crosslinking. Therefore, the thickness of the thus half-cured ultraviolet curable resin composition product can be made stable, and hence when the ultraviolet curable resin composition product is formed as a film-like one, it becomes possible to stabilize the smoothness and thickness of the resultant film.

Then, since the thus half-cured ultraviolet curable resin composition product is attached to one substrate, the other substrate is attached to the resultant ultraviolet curable resin composition product and the tacky adhesive layer is formed by curing the ultraviolet curable resin composition product according to ultraviolet crosslinking, the two substrates can be bonded together easily and stably. Furthermore, since the ultraviolet curable resin composition product is crosslinked by ultraviolet crosslinking at its portion having the double bond at its side chain to form the three-dimensionally crosslinked network structure together with the previously-crosslinked portion by thermal crosslinking, the tacky adhesive layer can increase its adhesive strength so that it becomes able to fix and hold the two substrates reliably.

### BRIEF DESCRIPTION OF DRAWINGS

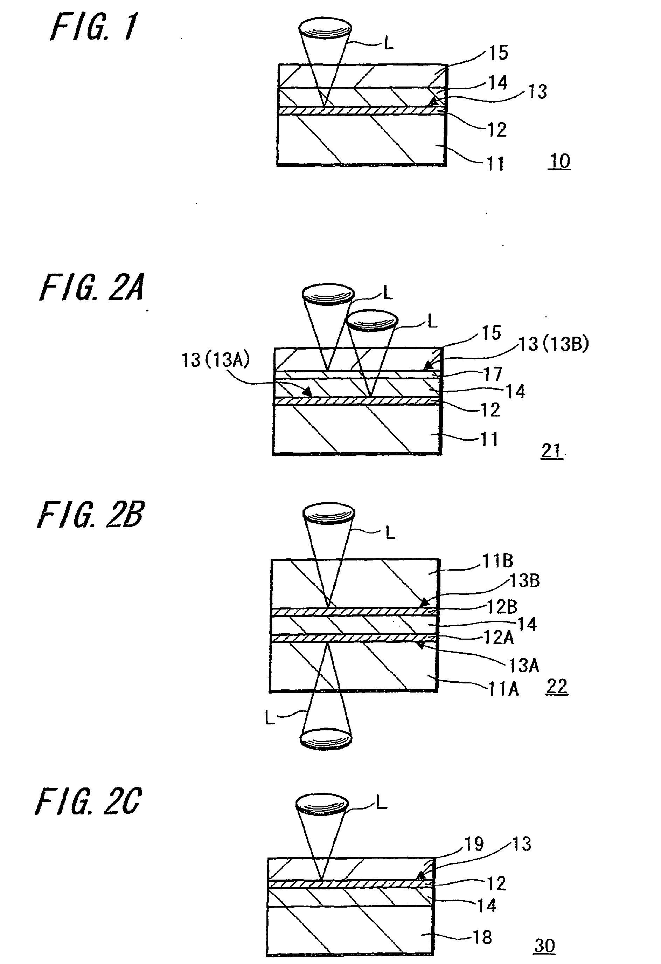

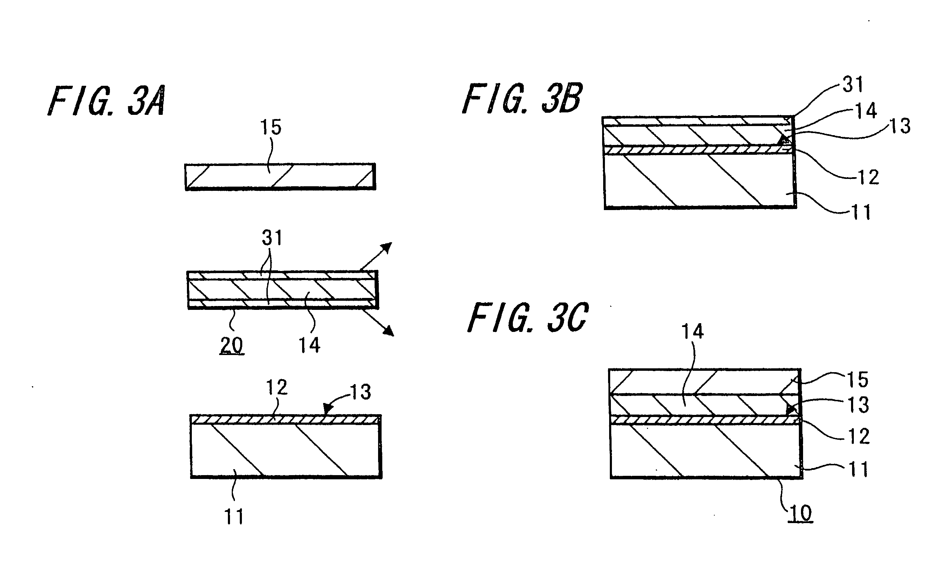

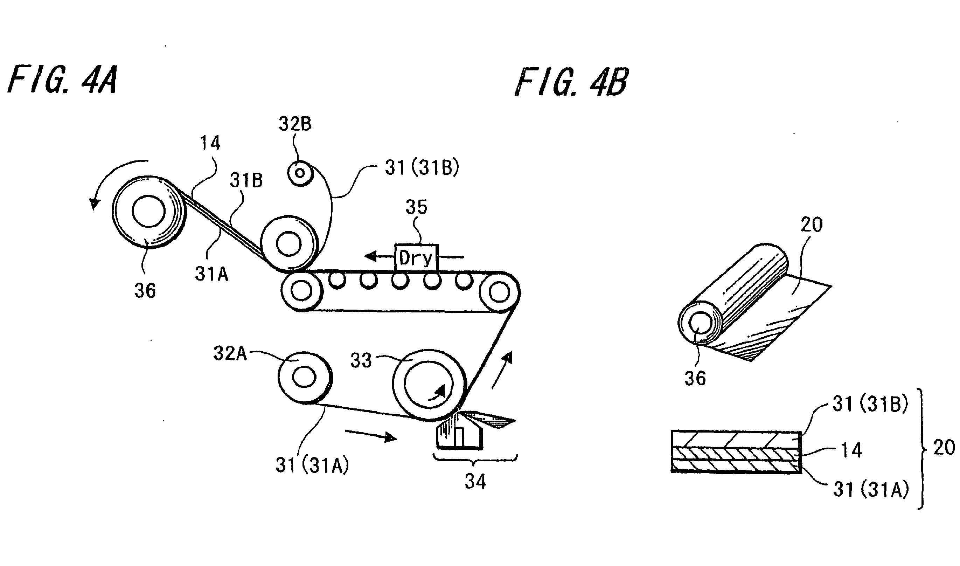

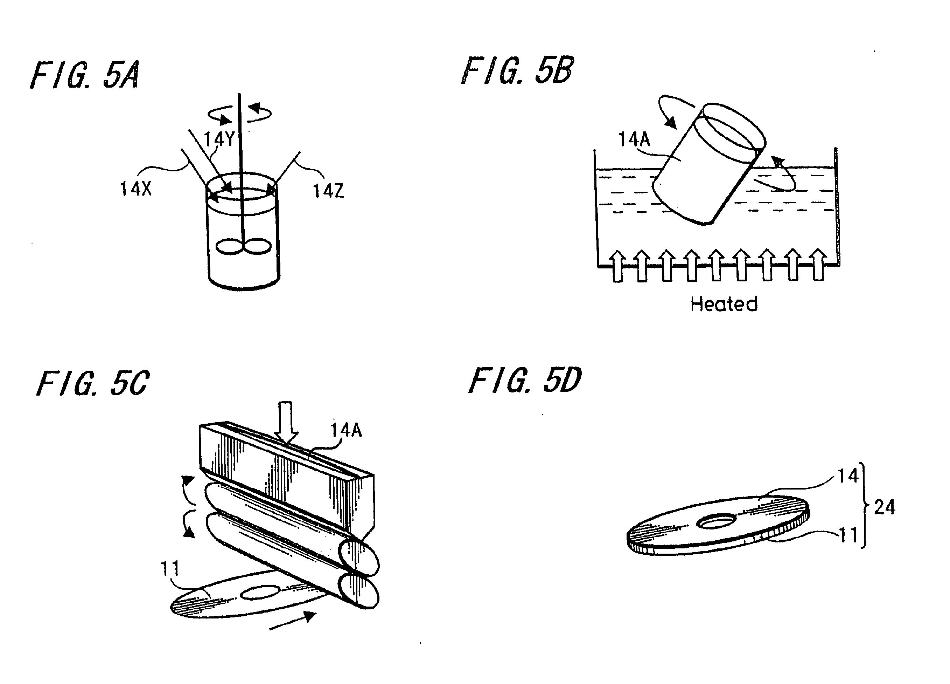

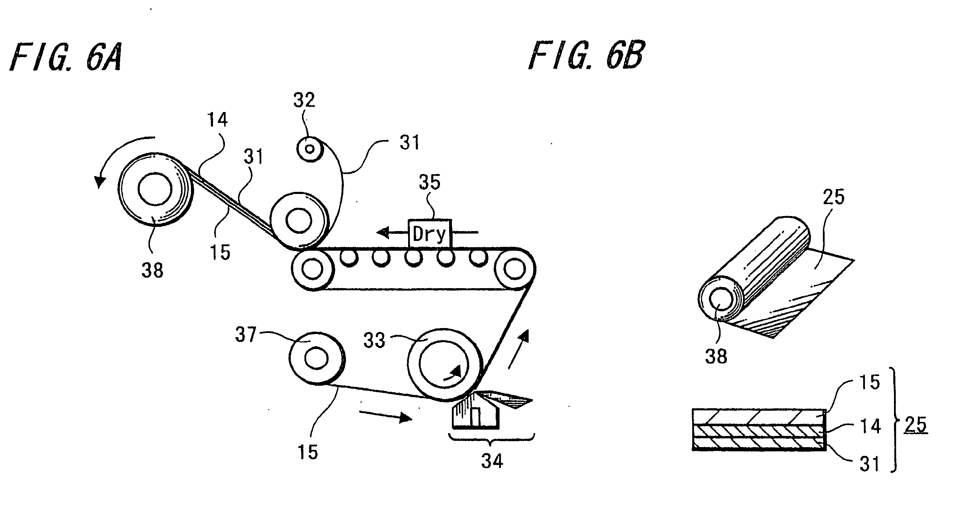

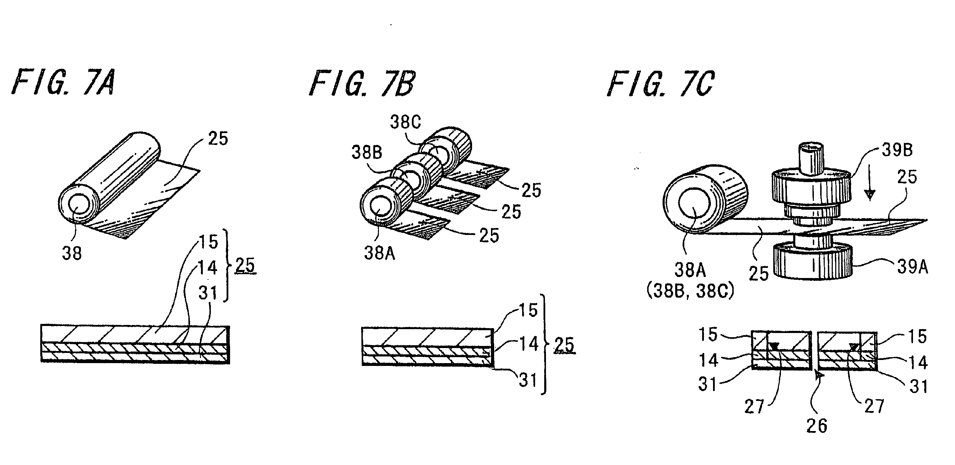

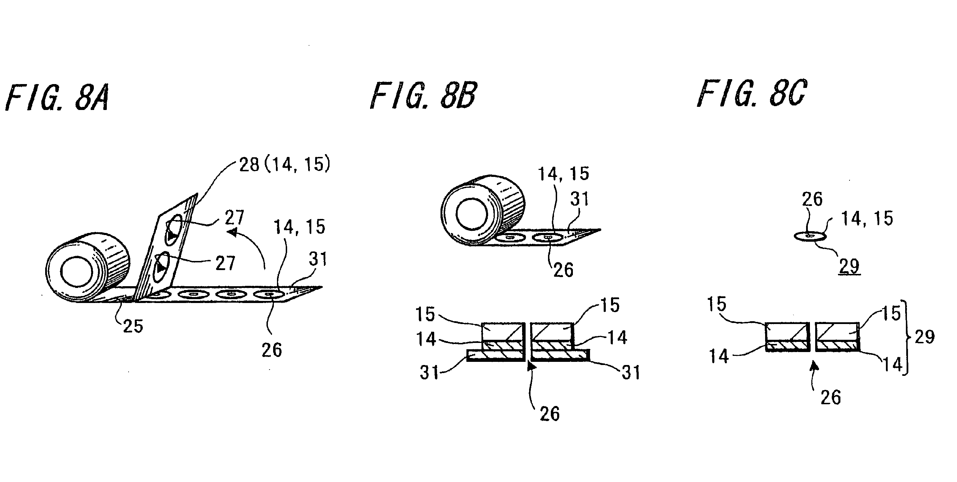

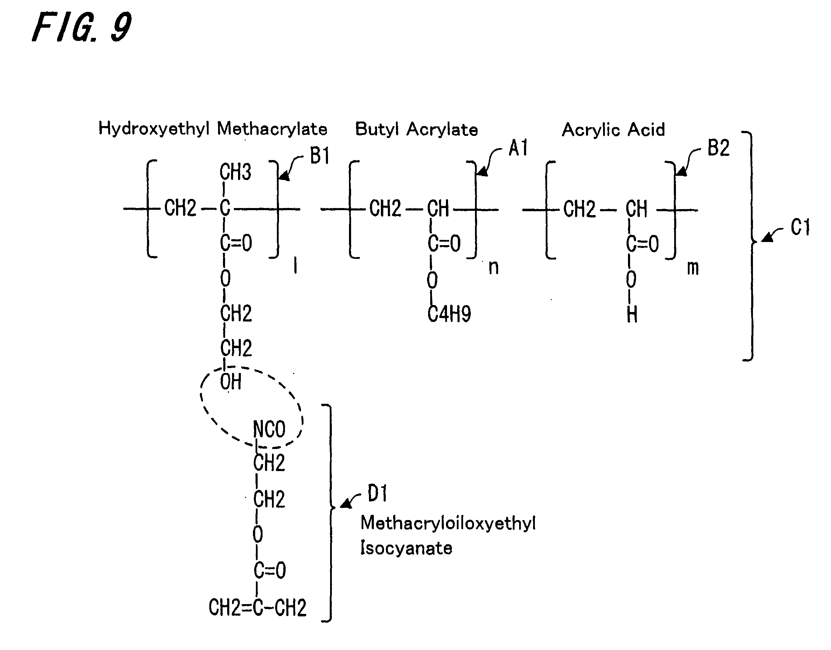

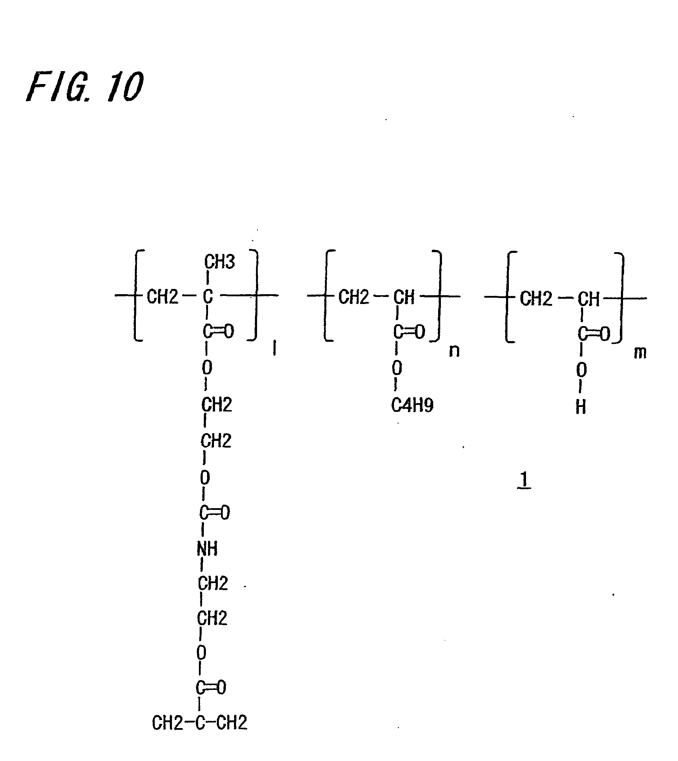

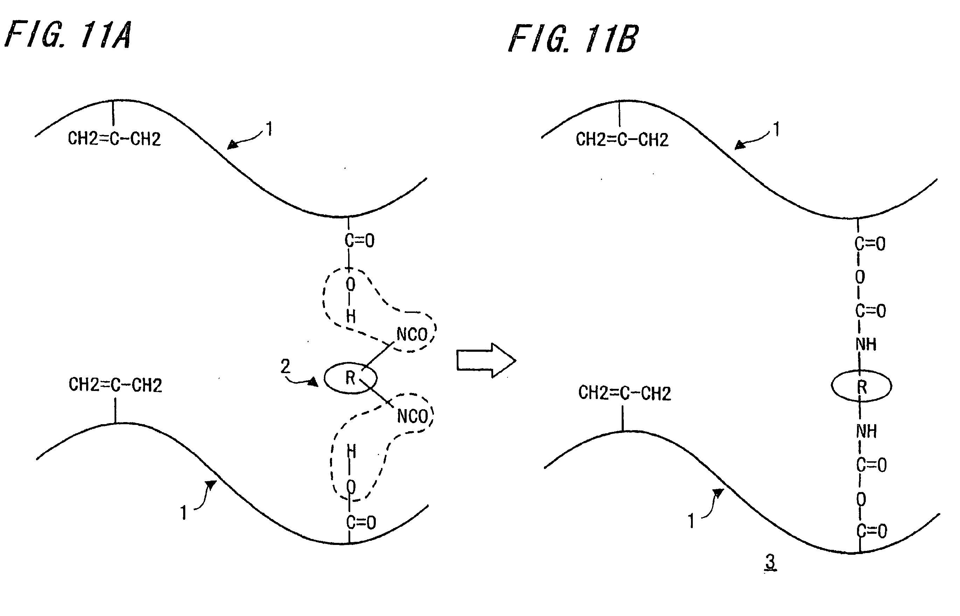

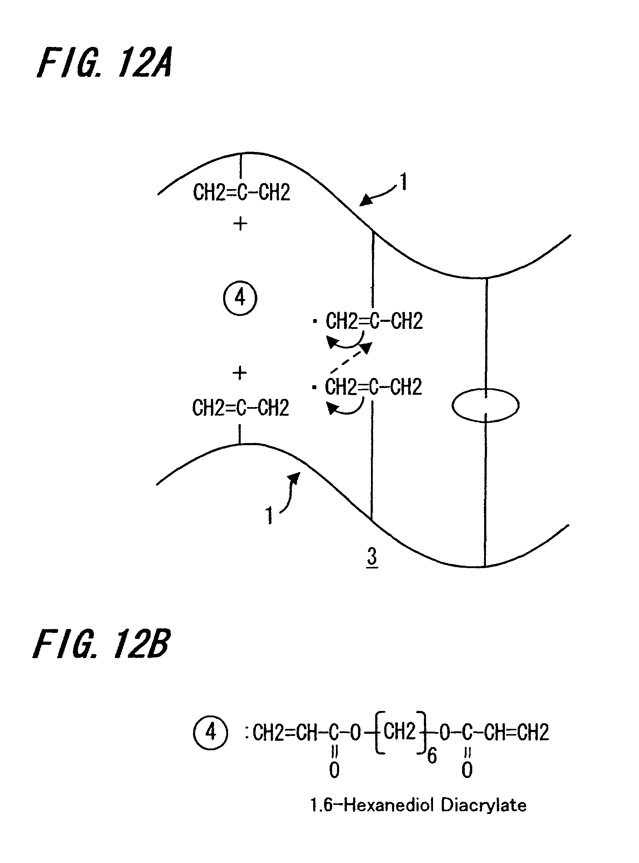

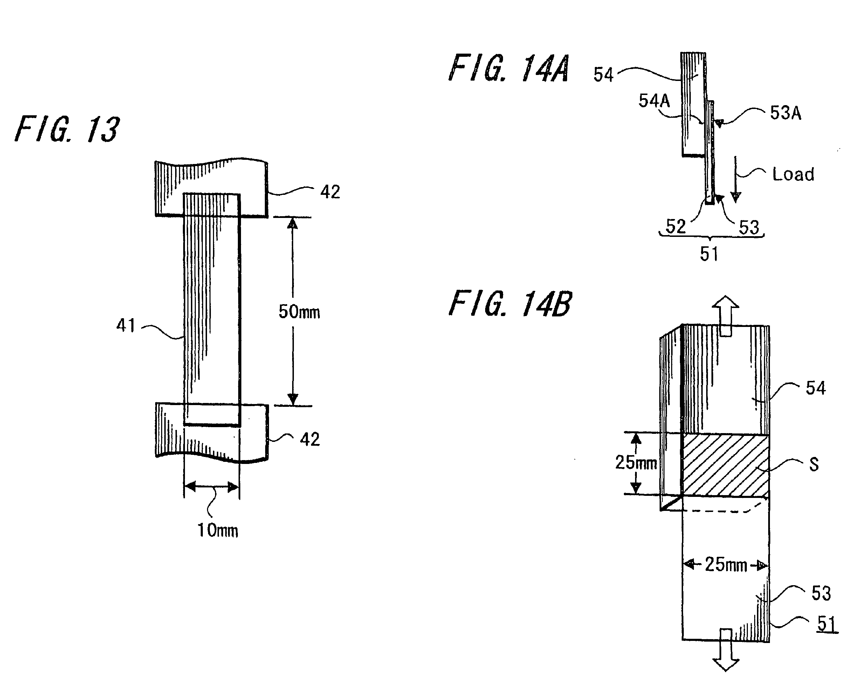

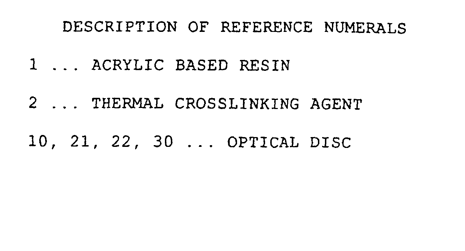

FIG. 1 is a diagram (cross-sectional view) showing a schematic arrangement of an optical disc according to an embodiment of the present invention; FIGS. 2A to 2C are cross-sectional views showing an optical disc according to other embodiment of the present invention; FIGS. 3A to 3C are process diagrams showing a method of manufacturing the optical disc shown in FIG. 1 according to an embodiment of the present invention; FIGS. 4A and 4B are process diagrams showing a manufacturing process of the sheet shown in FIG. 3A; FIGS. 5A to 5D are process diagrams showing manufacturing processes required when a tacky adhesive layer is directly formed on a disc substrate; FIGS. 6A and 6B are process diagrams showing manufacturing processes required when a tacky adhesive layer is directly formed on a cover film; FIGS. 7A to 7C are process diagrams showing manufacturing processes required when a tacky adhesive layer is directly formed on a cover film; FIGS. 8A to 8C are process diagrams showing manufacturing processes required when a tacky adhesive layer is directly formed on a cover film; FIG. 9 is a diagram showing a reaction between an acrylic based resin having hydroxyl group and carboxyl group and methacrylic ester having isocyanate group; FIG. 10 is a diagram showing an acrylic based resin having a double bond at its side chain and which is thus obtained by the reaction shown in FIG. 9; FIGS. 11A and 11B are diagrams to which reference will be made in explaining the reaction between the acrylic based resin having the double bond at its side chain and the thermal crosslinking agent; FIGS. 12A and 12B are diagrams to which reference will be made in explaining the manner in which the acrylic based resin having the double bond at the side chain is crosslinked by ultraviolet crosslinking; FIG. 13 is a diagram showing a tension test method of films; and FIGS. 14A and 14B are diagrams showing a test method for testing holding power of films.

### BEST MODE FOR CARRYING OUT THE INVENTION

In an optical disc in which at least two substrates are bonded together with a tacky adhesive layer, the present invention is to provide an optical disc in which a tacky adhesive layer is composed of a film in which an ultraviolet curable resin composition product containing an acrylic based resin having double bond at its side chain, a photopolymerization initiator and a thermal crosslinking agent are cured by thermal crosslinkng and ultraviolet crosslinking.

According to the present invention, there is provided the above-mentioned optical disc in which a substrate with a recording layer formed thereon and a film-like transparent substrate are bonded together with a tacky adhesive layer.

According to the present invention, there is provided the above-mentioned optical disc in which an ultraviolet curable resin composition product contains 0.1 to 5 parts by weight of photopolymerization initiator and 0.1 to 5 parts by weight of thermal crosslinking agent for 100 parts by weight of acrylic resin.

According to the present invention, in the above-described optical disc, the acrylic resin having the double bond at its side chain is obtained by reacting 0.1 to 20 parts by weight of more than one kind selected from acrylic acid ester containing isocyanate group and methacrylic acid ester containing isocynanate group with 100 parts by weight of resin (C) which results from copolymerizing 0.1 to 20 parts by weight of monomer (B) of more than one kind selected from monomers containing at least hydroxyl group or carboxyl group to 100 parts by weight of monomer (A) whose main component is more than one kind selected from acrylic acid ester and methacrylic acid ester.

According to the present invention, there is provided a method for manufacturing an optical disc in which at least two substrates are bonded together with a tacky adhesive layer, comprising a process for half-curing an ultraviolet curable resin composition product containing acrylic resin having a double bond at its side chain, a photopolymerization initiator and a thermal crosslinking agent by thermal crosslinking, a process for attaching the thus half-cured ultraviolet curable resin composition product to one substrate and a process for forming the adhesive layer for bonding the one substrate and the other substrate by curing the ultraviolet curable resin composition product by ultraviolet crosslinking using irradiation of ultraviolet rays.

Further, according to the present invention, there is provided the above-described optical disc manufacturing method in which the ultraviolet curable resin composition product is processed such that both ends of the ultraviolet curable resin composition product are sandwiched by peel-apart films, the ultraviolet curable resin composition product is attached to the one substrate after the peel-apart film of one side has been peeled and the other substrate is bonded to the one substrate after the peel-apart film of the other side has been peeled.

First, prior to the description of the specific embodiments of the present invention, an outline of the present invention will be described.

According to the present invention, there is provided an optical disc in which at least two substrates are bonded together with a tacky adhesive layer.

A transparent substrate and an opaque substrate are available as substrates that may be bonded together with the tacky adhesive layer.

Then, the transparent substrate should be used as a substrate that can allow light (laser light, etc.) for reproducing and recording information from and on at least the optical disc to pass therethrough.

On the other hand, the substrate that may not allow light to pass therethrough is not limited to a particular substrate and an opaque substrate can be used as such substrate.

As the transparent substrate, there can be enumerated a glass substrate, a polycarbonate resin, a polymethyl methacrylate resin (PMMA), a polyolefin resin, a vinyl chloride resin, a polystyrene resin, an epoxy resin, a polyallylate resin, a polyether sulfone resin, a silicon resin, a polyethylene terephthalate resin, etc. for example.

As the opaque resin, there can be enumerated an opaque resin class, a colored resin class containing pigments and dyes, metals, ceramics, etc.

Then, characteristics of the present invention lie in the material of, in particular, the tacky adhesive layer that is used to bond the substrates together.

Specifically, the tacky adhesive layer is formed such that an ultraviolet curable resin composition product containing an acrylic based resin having a double bond at its side chain, a photopolymerization initiator and a thermal crosslinking agent is cured by thermal crosslinking and ultraviolet crosslinking of the acrylic based resin.

Further, according to the present invention, the ultraviolet curable resin composition product containing at least the acrylic based resin having the double bond at its side chain, the photopolymerization initiator and the thermal crosslinking agent is half-cured by thermal crosslinking, the thus half-cured ultraviolet curable resin composition product is attached to one of the two substrates to be bonded and the other substrate is bonded to the ultraviolet curable resin composition product, whereafter the ultraviolet curable resin composition product is cured by illumination of ultraviolet rays to thereby form the tacky adhesive layer.

The acrylic based resin having the double bond at its side chain can be obtained in the manner which will follow. A monomer (B) of more than one kind selected from monomers containing at least hydroxyl group or carboxyl group is copolymerized with a monomer (A) having more than one kind selected from acrylic acid ester or methacrylic acid ester (i.e. (metha)acrylic acid ester), for example, to thereby obtain a resin (C) of 5000 to 1000000 weight-average molecular weights at temperature less than a glass transition point of 0°C. Further, a (D) of more than one kind selected from acrylic acid ester containing isocyanate group or methacrylic acid ester containing isocyanate group is reacted with this resin (C) to thereby obtain the above-mentioned acrylic based resin.

As shown in FIG. 9, for example, a resin (C1) in which hydroxyethyl methacrylate (B1) is copolymerized with butyl acrylate (shown by Al) that is one kind of acrylic acid ester corresponding to the above-mentioned (A) as a monomer containing hydroxyl group corresponding to the above-described (B) and acrylic acid (B2) is copolymerized with butyl acrylate as a monomer containing carboxyl group is mixed with methacryloiloxyethyl isocyanate (D1) corresponding to the above-described (D) and is then reacted with butyl acrylate which is a kind of acrylic acid ester corresponding to the above-described (A). At that time, hydroxyl group OH of hydroxyethylmethacrylate (B1) and isocyanate group NCO of methacryloiloxyethyl isocyanate (D1), for example, are reacted with each other to form urethane coupling, thereby obtaining an acrylic based resin 1 having a double bond of CH₂ = C at its side chain as shown in FIG. 10.

It is frequently observed that the isocyanate group NCO of the methacryloiloxyethyl isocyanate (D1) may react with the carboxyl group of the acrylic acid (B2).

As the monomer having the acrylic acid ester or the methacrylic acid ester as the main component, in addition to the above-mentioned butyl acrylate, there may be enumerated methacrylic acid butyl, (metha) acrylic acid - 2 - ethylhexyl, (metha) acrylic acid methyl, (metha) acrylic acid ether, (metha) acrylic acid propyl, (metha) acrylic acid isooctyl, (metha) acrylic acid nonyl, etc.

Other vinyl based monomers that can be copolymerized with (metha) acrylic acid ester may be used together with the (metha) acrylic ester. As the vinyl based monomer, there may be enumerated acrylamide, styrene, (metha) acrylonitrile, N-vinylpyrrolidone, maleic acid, vinyl caprolactam, etc., for example.

As the monomers that can be copolymerized with this (metha) acrylic acid ester and which contain at least hydroxyl group or carboxyl group, in addition to the above-mentioned hydroxyether methacrylate and acrylic acid, there can be used hydroxyethylacrylate, hydroxypropyl (metha) acrylate, butanediole (metha) acrylate, phenoxyhydroxypropyl (metha) acrylate, glyceroldi (metha) acrylate and ECH-denatured propylene glycoldi (metha) acrylate.

Further, as the acrylic acid ester containing isocyanate group or the methacrylic acid ester containing isocyanate group, in addition to the above-mentioned methacryloiloxyethyl isocyanate, there can be used such one in which a polyisocyanate compound such as tolylenediisocyanate and xylenediisocyanate is reacted with monomers having hydroxyl group, such as hydroxyether (metha) acrylate and hydroxypropyl (metha) acrylate.

Then, more than one kind of the thus enumerated materials is selected and thereby the above-mentioned components (A), (B), (D) are formed.

0.1 to 20 parts by weight of monomers (B) of more than one kind selected from the monomers containing at least the hydroxyl group or the carboxyl group should preferably be mixed into and copolymerized with 100 parts by weight of the monomer (A) having more than one kind of components selected from the acrylic acid ester or the methacrylic acid ester (i.e. (metha) acrylic acid ester) as the main component.

If the mixed amount is less than 0.1 parts by weight, there is then the risk that the resultant ultraviolet curable resin composition product will not have sufficient strength by ultraviolet crosslinking. If on the other hand the mixed amount is greater than 20 parts by weight, there is then the risk that a transparent tacky adhesive layer obtained before being cured with illumination of ultraviolet rays will become too hard.

Further, 0.1 to 20 parts by weight of the (D) of more than one kind selected from the acrylic acid ester containing the isocyanate group or the methacrylic acid ester containing the isocyanate group may be mixed into and reacted with 100 parts by weight of the copolymerized resin (C). As a consequence, the resin of the amount that can be sufficiently reacted with the hydroxyl group or the carboxyl group can be supplied and an extra component that does not contribute to the reaction can be decreased.

As the thus obtained photopolymerization initiator that is mixed into the acrylic based resin having the double bond at its side chain, there may be enumerated 1-hydroxycyclohexylphenyl ketone, ditoxyacetophenone, 2-hydroxy-2-methyl-1-phenylpropane-1-on, benzoin, benzylmethyl ketal, benzophenone, hydroxybenzophenone, thioxysannsonn, isopropylthioxysannsonn, methylphenylglyoxylate, benzyl, camphor quinone, 2-ethylanthraquinone, 3, 3', 4, 4'-tetra (t-butylperoxycarbonyl) benzophenone, etc.

Owing to the action of this photopolymerization initiator, when irradiated with ultraviolet rays, the double bond at the side chain of the acrylic based resin is released, and hence extra carbon atom C at the bond hand is coupled to extra carbon atom C of other bond hand. By this linkage, the acrylic based resins 1 are crosslinked one by one in a three-dimensional fashion to increase its adhesive strength.

The mixed amount of this photopolymerization initiator is selected to be 0.1 to 5 parts by weight relative to 100 parts by weight of the acrylic based resin.

If the mixed amount of the photopolymerization initiator is too small, then the adhesive strength obtained by ultraviolet crosslinking is decreased too much. As a result, there is a risk that the drawbacks such as flow of resin, peeling of resin and slide of resin will occur.

If on the other hand the mixed amount of the photopolymerization initiator is too large, then there is the risk that the ultraviolet curable resin composition product will be yellowed and will produce a strong smell after it has been cured.

As the thermal crosslinking agent that is mixed into the acrylic based resin together with the photopolymerization initiator, there may be used an isocyanate based crosslinking agent (e.g. crosslinking agent manufactured by Nippon Polyurethane Industry Co. Ltd., under the trade name of "COLONATE L"), an aziridine compound (e.g. aziridine compound manufactured by Sogo Yakuhin Kogyo Kabushiki Kaisha under the trade name of "trimethylolpropane-tri- β -aziridinylpropionate"), a melamine resin (e.g. melamine resin manufactured by Dainippon Ink & Chemicals Ind., under the trade name of "SUPERBECKAMINE J-820"), etc.

If the ultraviolet curable resin composition product is composed of the above-mentioned acrylic based resin and the above-mentioned photopolymerization initiator, then when this ultraviolet curable resin composition product is formed as the film-like one, this film is too soft and is easily deformed. Thus, smoothness of the film is lost so that optical characteristics will be degraded.

To avoid such drawbacks, according to the present invention, the thermal crosslinking agent is mixed into the ultraviolet curable resin composition product together with the acrylic based resin and the photopolymerization initiator, whereby at least a part of the acrylic based resin is formed as a three-dimensional structure when the ultraviolet curable resin composition product is coated and dried. Thus, the strength of the film-like ultraviolet curable resin composition product can increase to a certain extent that the film-like ultraviolet curable resin composition product can be prevented from being wobbled.

Then, as shown in FIG. 11A, for example, when the thermal crosslinking agent 2 having more than two isocyanate groups NCO, such as the above-mentioned COLONATE L (having three isocyanate groups NCO) is in use, the isocyanate group NCO of the thermal crosslinking agent 2 reacts with the carboxyl group COOH, for example, to thermally crosslink the acrylic based resin in a three-dimensional fashion. As a result, as shown in FIG. 11B, it is possible to manufacture the resin composition product 3 of which the strength can be increased while the tackiness thereof is being retained.

The mixed amount of this thermal crosslinking agent is selected to be 0.1 to 5 parts by weight with respect to 100 parts by weight of the acrylic based resin.

If the mixed amount of the thermal crosslinking agent is too small, then there is the risk that the above-mentioned effects will not be achieved.

If on the other hand the mixed amount of the thermal crosslinking agent is too large, then there is the risk that the transparent tacky adhesive layer becomes too hard before it is being cured by illumination of ultraviolet rays.

The following components can be added to the ultraviolet curable resin composition product that should inevitably require the acrylic based resin having the double bond at its side chain, the photopolymerization initiator and the thermal crosslinking agent.

First, triethanol amine, diethylethanol amine, Michler's ketone, 2-dimethylaminobenzoic acid ethyl, etc., can be added to the ultraviolet curable resin composition product as a photopolymerization initiator auxiliary.

1, 6-hexanonediolediacrylate, dicyclopentanile (metha) acrylate, viciphenol A di(metha) acrylate, diethyleneglycoldi(metha) acrylate, neopentylglycoldi (metha) acrylate, pentaerythritoldi (metha) acrylate, trimethylolpropanetri (metha) acrylate, trimethylolpropanetri (metha) acrylate, etc., can be added to the ultraviolet curable resin composition product as the photosensitive monomer and oligomer, for example. The photosensitive monomer and oligomer are interposed between the double bonds of the acrylic based resin to assist the ultraviolet crosslinking as shown by reference numerals 4 in FIGS. 12A and 12B.

Vinyltriethoxy silane, γ-glycidoxypropyl trimethoxy silane, γ-aminopropyltriethoxy silane, γ-metha clyloxypropyltrimethoxy silane, γ-mercaptopropyltrimethoxy silane, etc., for example, may be used as a coupling agent.

Further, hydroquinone, methoquinone, benzoquinone, anthraquinone, etc., for example, may be used as a thermal polymerization inhibitor.

Moreover, silicon oil, polyvinyl butyral, etc., for example, may be used as a leveling agent.

Moreover, fatty acid ester, phosphate, fluorinated derivative, etc., for example, may be used as a surfactant.

Further, the amount of illumination of ultraviolet rays for curing the above-mentioned ultraviolet curable resin composition product by ultraviolet crosslinking should preferably fall within a range of from 0.1 to 3.0 J/cm².

If the amount of illumination of ultraviolet rays is smaller than 0.1 J/cm², then there is the risk that the ultraviolet curable resin composition product will be cured unsatisfactorily. If on the other hand the amount of illumination of ultraviolet rays is larger than 3.0 J/cm², then there is the risk that the resin composition product will be yellowed.

The above-mentioned ultraviolet curable resin composition product can be used a film-like ultraviolet curable resin composition product in which a resin composition product was previously coated on a peel-apart sheet, for example. In this case, after the resin composition product has been coated on the peel-apart sheet, the film-like resin composition product is half-cured by the above-mentioned thermal crosslinking, for example.

When the ultraviolet curable resin composition product is formed as the film-like ultraviolet curable resin composition product as described above, the film-like ultraviolet curable resin composition product becomes excellent in handling property and workability. Also, when the ultraviolet curable resin composition product is half-cured in advance, since the solvent has already been removed from the ultraviolet curable resin composition product, there is then the advantage that localized evacuation becomes unnecessary when this ultraviolet curable resin composition product is in use as compared with the case in which liquid adhesives are in use.

Next, various characteristics (mainly mechanical characteristics) of the above-mentioned ultraviolet curable resin composition product are shown on a table 1.

The table 1 shows various characteristics obtained from the ultraviolet curable resin composition product before and after the ultraviolet curable resin composition product is cured, i.e. tensile elastic modulus, tensile breaking elongation, yield strength, holding power and adhesive strength, respectively.

**TABLE 1**

| | Before cured by illumination of ultraviolet rays | After cured by illumination of ultraviolet rays |
|---|---|---|
| Tensile elastic modulus [kg weight/cm2] | 1.0 to 3.0 | Increased (1.1 to 3.0 times) |
| Tensile breaking elongation [%] | 1000 to 10000 | Decreased (1/3 to 1/10 times) |
| Yield strength [g weight/mm2] | 2 to 10 | Increased (1.2 to 3.0 times) |
| Holding power (JIS creep test, 40°C, 1kg) | Slide amount of more than 1 mm | Slide amount of less Slide amount of less than 1 mm |
| Adhesive strength (180°peel test, acrylic plate and glass plate) | More than 0.7kg weight/2 cm | More than 0.7kg weight/2 cm |

Of the various characteristics shown on the table 1, the tensile elastic modulus, the tensile breaking elongation and the yield strength were obtained when a 1 mm-thick tacky adhesive film (10 mm wide and 50 mm long) made of the ultraviolet curable resin composition product was attached to a tensile testing machine 42 and measured at stretch speed 200 m/minute as shown in FIG. 13, respectively.

The holding power was measured as follows. After a 25 µ m-thick polyethylene terephthalate (PET) film has been attached to the tacky adhesive surface of the tacky adhesive film in which the ultraviolet curable resin composition product was formed on the peel-apart film and cut with a width of 25 mm, a measurement film 51 was manufactured by peeling the peel-apart film. As shown in FIGS. 14A and 14B, the slide amount was measured under the condition that the measurement film 51 composed of this ultraviolet curable resin composition product 52 and the PET film 53 was attached to a 2 mm-thick acrylic plate (trade name: PARAGLASS P) 54 so that an adhesive area S (see FIG. 14B) becomes 25 mm x 25 mm and then held for an hour at 40°C with application of static load of 1 kg. At that time, the slide amount was measured by measuring a space between notches 53A and 54A one hour later after the notches 53A, 54A have been formed on the PET film 53 and the acrylic plate 54.

The adhesive strength was measured in such a manner that 180° peel strength was measured after a 20 mm-wide measurement film, which was produced similarly to the holding power measurement film 51, has been attached to the acrylic plate and the glass plate and left at room temperature for an hour. At that time, the adhesive strength was measured at stretch speed of 300 mm/minute. Obtained results were the same both in the acrylic plate and the glass plate.

The ultraviolet curing condition of the ultraviolet curable resin composition product was selected to be illumination of ultraviolet rays of the illumination amount of 1.0 J/cm² using a metal halide lamp.

Of the various characteristics shown on the table 1, in particular, the tensile elastic modulus, the tensile breaking elongation and the yield strength obtained before the ultraviolet curable resin composition product is cured by illumination of ultraviolet rays show the fact that the two substrates can be bonded together with ease.

The holding power and the adhesive strength obtained after the ultraviolet curable resin composition product has been cured by illumination of ultraviolet rays show stability with which the two substrates can be fixed to and held together and reliability with which the two substrates can be bonded together.

As described above, according to the present invention, after the ultraviolet curable resin composition product containing the acrylic based resin having the double bond at its side chain, the photopolymerization initiator and the thermal crosslinking agent has been in use, at least a part of the ultraviolet curable resin composition product is thermally crosslinked and the two substrates have been bonded together in this state, the acrylic based resin is crosslinked by ultraviolet crosslinking to cure the ultraviolet curable resin composition product, thereby resulting in the tacky adhesive layer being formed.

Accordingly, since a part of the ultraviolet curable resin composition product is thermally crosslinked before the ultraviolet curable resin composition product is cured by ultraviolet crosslinking, the ultraviolet curable resin composition product is placed in the state in which it has proper softness and proper strength before it is cured by ultraviolet crosslinking (before it is irradiated with ultraviolet rays).

Therefore, the thickness of the ultraviolet curable resin composition product can be stabilized before it is being cured by ultraviolet crosslinking. For example, when the ultraviolet curable resin composition product is formed as the film-like one, it becomes possible to stabilize smoothness and thickness of the film. Since the two substrates are bonded together in this state, the two substrates can be bonded together easily and stably.

Moreover, since bubbles can be prevented from being produced in the two substrates when the two substrates are bonded together, bubbles can be prevented from being produced when the ultraviolet curable resin composition product is cured by thermal crosslinking. If the resin composition product is too hard or too elastic, then bubbles are produced in the two substrates when the two substrates are bonded together so that bubbles are produced when the resin composition product is cured.

Since the ultraviolet curable resin composition product is crosslinked at its portion having the double bond at its side chain after the ultraviolet curable resin composition product has been cured by ultraviolet crosslinking so that the thermally-crosslinked portions and the portions crosslinked by ultraviolet rays constitute a three-dimensional network structure, the tacky adhesive layer to be formed has sufficient strength so that the two substrates can be fixed and held together with high reliability.

Subsequently, specific examples of the present invention will be described.

FIG. 1 is a diagram (cross-sectional view) showing a schematic arrangement of an optical disc according to an embodiment of the present invention. An optical disc 10 is composed of a polycarbonate substrate 11 serving as a disc substrate on which a reflective layer 12 is formed and a transparent cover film 15 bonded to this polycarbonate substrate 11 with a tacky adhesive layer 14, e.g., UV-PSA, i.e., PSA (Pressure Sensitive Adhesive) that is cured by irradiation of ultraviolet rays. Pre-grooves, not shown, are formed on the polycarbonate substrate 11, and a recording layer 13 is formed on the upper surface of the reflective layer 12.

Then, in this optical disc 10, the recording layer 13 is read out and written, i.e. information is reproduced from or recorded on the recording layer by laser light L introduced from the side opposite to the disc substrate 11, i.e., from the side of the cover film 15.

Then, in this embodiment, in particular, the tacky adhesive layer 14 is composed of a component which results from curing an ultraviolet curable resin composition product containing the above-mentioned acrylic based resin having the double bond at its side chain, a photopolymerization initiator and a thermal crosslinking agent by thermal crosslinking and ultraviolet crosslinking of the acrylic based resin.

Moreover, in the optical disc 10 according to this embodiment, since the laser light L should pass through the tacky adhesive layer 14 in order to reproduce and record information, the tacky adhesive layer 14 which is composed of the above-mentioned cured ultraviolet curable resin composition product has to pass the laser light L sufficiently.

Other films, not shown, may be further formed to construct the optical disc 10 shown in FIG. 1 according to the need.

According to the optical disc 10 of the above-mentioned embodiment, since the tacky adhesive layer 14 in which the disc substrate 11 and the cover film 15 are bonded together results from curing the ultraviolet curable resin composition product containing the acrylic based resin having the double bond at its side chain, the photopolymerization initiator and the thermal crosslinking agent by thermal crosslinking and ultraviolet crosslinking of the acrylic based resin, the ultraviolet curable resin is crosslinked at its portion having the double bond at its side chain by ultraviolet crosslinking and other portion (e.g. carboxyl group) is crosslinked by thermal crosslinking. Since the different portions of the ultraviolet curable resin composition product are respectively crosslinked by ultraviolet crosslinking and thermal crosslinking, a network structure that was crosslinked in a three-dimensional fashion is constructed in the tacky adhesive layer 14.

Since the tacky adhesive layer has the above-mentioned network structure, the tacky adhesive layer 14 has a sufficient strength, and hence become difficult to be affected by a slide stress. At the same time, since the tacky adhesive layer 14 may absorb a lesser amount of moisture, the disc substrate can be prevented from being warped due to such moisture, and hence the highly-reliable optical disc 10 can be constructed.

Subsequently, other embodiments of the optical disc according to the present invention are shown in FIGS. 2A to 2C, respectively.

First, an optical disc 21 shown in FIG. 2A includes a recording layer 13 of two layers comprising a first recording layer 13A and a second recording layer 13A, and hence a signal can be read out from and written on from one side (information is reproduced from or recorded on one side).

This optical disc 21 includes a polycarbonate substrate 11 with pre-grooves formed thereon, not shown, on which a reflective layer 12 is formed, and the first recording layer 13A is formed on the upper surface of the reflective layer 12. A second recording layer 13B is formed on the lower surface of the reflective layer by a cover film 15 including the second recording layer 13B with pre-grooves formed thereon, not shown.

Then, the polycarbonate substrate 11 and the cover film 15 are bonded together with the tacky adhesive layer 14 to form the optical disc 21.

Moreover, in this optical disc 21, in order to obtain a signal from the second recording layer 13B, a semi-transmission reflective layer 17 is provided between the cover film 15 and the tacky adhesive layer 14.

Also in this optical disc 21, as the tacky adhesive layer 14 for bonding the polycarbonate substrate 11 and the cover film 15, there is formed the ultraviolet curable resin composition product having the aforementioned arrangement. Thus, the highly-reliable optical disc 21 can be realized.

Next, an optical disc 22 shown in FIG. 2B includes a recording layer of two layers comprising the first recording layer 13A and the second recording layer 13B to read out and write a signal from both sides (to reproduce or record information from or on both sides).

In this optical disc 22, the first and second recording layers 13A and 13B are constructed by forming reflective layers 12A, 12B on the two polycarbonate substrates 11A, 11B with pre-grooves formed thereon, not shown.

Then, the two polycarbonate substrates 11A, 11B are bonded together with the tacky adhesive layer 14 in such a manner that the reflective layers 12A, 12B and the recording layers 13A, 13B are formed inside and thereby the optical disc 22 is formed.

Also in this optical disc 22, as the tacky adhesive layer 14 for bonding the two polycarbonate substrates 11A and 11B, there is formed the ultraviolet curable resin composition product having the aforementioned arrangement. Thus, the highly-reliable optical disc 22 can be realized.

In the case of this optical disc 22, since the laser light L for reading and writing a signal need not pass through the tacky adhesive layer 14, a transmittance of the laser light L in the tacky adhesive layer 14 need not be increased so much.

Next, in an optical disc 30 shown in FIG. 2C, a signal may be read out from and written on the recording layer 13 (information may be reproduced from or recorded on the recording layer) by irradiating the laser light L on the recording layer from the side of the cover film 19 on which the recording layer 13 is formed.

In this optical disc 30, the recording layer 13 is formed on the cover film 15 on which pre-grooves, not shown, are formed and this cover film 19 is bonded to the polycarbonate substrate 18 with the tacky adhesive layer 14. In this case, pre-grooves are not formed on the polycarbonate substrate 18.

Also in this optical disc 30, the ultraviolet curable resin composition product having the aforementioned arrangement is formed as the tacky adhesive layer 14 for bonding the cover film 19 and the polycarbonate substrate 18, whereby the highly-reliable optical disc 30 can be realized.

Subsequently, as an optical disc manufacturing method according to an embodiment of the present invention, a method for manufacturing the optical disc 10 shown in FIG. 1 will be described. Herein, let us describe a manufacturing method in which case the aforementioned half-caked ultraviolet curable resin composition product is sandwiched by the peel-apart films and thereby formed as a dry film.

First, a 1.1 mm-thick polycarbonate substrate 11 and a transparent cover film 15 made of a 75 *µ*m-thick polycarbonate are prepared as the two substrates, for example. As mentioned hereinbefore, the pre-grooves are formed on the polycarbonate substrate 11 and the reflective layer 12 is formed on the polycarbonate substrate 11, thereby forming the recording layer 13 on the upper surface of the polycarbonate substrate.

Moreover, there is prepared a sheet 20 having an arrangement in which the tacky adhesive layer 14 composed of the ultraviolet curable resin composition product which is in the half-caked state (in the thermally-crosslinked state) is sandwiched at its upper and lower surfaces by peel-apart sheets 31 formed of a polyethylene terephthalate (PET) film.

This sheet 20 is a so-called dry film-like sheet of an ultraviolet curable resin composition product and a solvent is previously removed from the resin composition product when the ultraviolet curable resin composition product is half-caked by thermal crosslinking.

The sheet shown in FIG. 3A can be manufactured as shown in FIG. 4, for example.

First, FIG. 4A shows a series of processes.

One peel-apart sheet 31 (31A) is pulled out from a roll 32A and brought to a backup roll 33 where it is coated with a tacky adhesive of an ultraviolet curable resin composition product with a solvent dispersed thereinto by a head 34.

Next, the resultant peel-apart sheet is heat-treated and dried by a dryer 35 and the ultraviolet curable resin composition product is thereby thermally crosslinked to produce the tacky adhesive layer 14.

Next, another peel-apart sheet 31 (31B) is pulled out from a roll 32B and bonded to the surface of the tacky adhesive layer.

Subsequently, one peel-apart sheet 31A, the half-caked tacky adhesive layer 14 and the other peel-apart sheet 31B are rewound such that they are laminated with each other to thereby produce a roll 36.

In this manner, there can be obtained the roll 36 of the sheet 20 in which one peel-apart sheet 31A, the half-caked tacky adhesive layer 14 and the other peel-apart sheet 31B are laminated with each other as shown in FIG. 4B.

Then, since the ultraviolet curable resin composition product is half-caked by thermal crosslinking, the ultraviolet curable resin composition product has proper softness and proper strength, a distribution of thickness becomes satisfactory and accuracy of a thickness becomes high.

Next, the sheet 20 is cut in necessary size, one peel-apart sheet 31 (peel-apart sheet of lower surface side) is peeled from the sheet 20, and the tacky adhesive layer 14 is bonded to one substrate side (the side of the polycarbonate substrate 11 in the case of this sheet of drawing) of the polycarbonate substrate 11 or the cover sheet 15 as shown in FIG. 3B. Thereafter, the other peel-apart sheet 31 (in this case, the peel-apart sheet of the upper surface side) is peeled from the tacky adhesive layer 14.

Then, the other substrate (in this case, the cover film 15) is attached to the tacky adhesive layer 14 as shown in FIG. 3C.

Further, the ultraviolet curable resin composition product of the tacky adhesive layer 14 is cured by illumination of ultraviolet rays.

Thus, the optical disc 10 shown in FIG. 1 can be manufactured.

As described above, both ends of the tacky adhesive layer 14 composed of the ultraviolet curable resin composition product are sandwiched by the peel-apart films 31, the peel-apart film 31 of one side is peeled from the tacky adhesive layer and attached to one substrate, i.e. the polycarbonate substrate 11. Then, after the remaining peel-apart film 31 has been peeled from the tacky adhesive layer, this peel-apart film is bonded to the other substrate, i.e. the cover film 15 and the ultraviolet curable resin composition product of the tacky adhesive layer 14 is cured by irradiation of ultraviolet rays, thereby making it possible to manufacture the highly-reliable optical disc 10 in which the thickness of the tacky adhesive layer 14 is high in accuracy.

In this manner, the ultraviolet curable resin composition product is previously formed as the dry film to produce the sheet 20 by the method in which the thickness of the tacky adhesive layer 14 may become high in accuracy. Moreover, by the lamination method with high accuracy that has been established so far from a technology standpoint, this sheet is attached to the first substrate and then attached to the second substrate by a similar method.

According to these methods, since the tacky adhesive layer can be formed so as to have the stable thickness, there can be obtained the tacky adhesive layer with excellent distribution of thickness as compared with the case using an UV-curable resin.

Moreover, since the ultraviolet curable resin composition product is formed as the dry film-like sheet in advance, resins can be prevented from being splashed during bonding work. Furthermore, since the solvent is removed by splashing in advance, a smell of the solvent can be alleviated and hence work efficiency can be improved.

Since the ultraviolet curable resin composition product is less contracted when it is cured after the two substrates have been bonded, the ultraviolet curable resin composition product can be prevented from being warped in accordance with contraction.

Since the solvent is decreased when the ultraviolet curable resin composition product is thermally crosslinked, the smell of the ultraviolet curable resin composition product can be alleviated and hence work efficiency can be improved. Further, the ultraviolet curable resin composition product is less contracted when it is cured by irradiation of ultraviolet rays after the two substrates have been bonded and hence the ultraviolet curable resin can be prevented from being warped substantially due to contraction.

Since the three-dimensional network structure is formed in the tacky adhesive layer 14 after the ultraviolet curable resin composition product has been cured by ultraviolet crosslinking, the optical disc can be prevented from being affected by slid stress and can be prevented from absorbing moisture. Hence, the optical disc can be prevented from being curved substantially due to the absorption of moisture.

Even when a method in which the ultraviolet curable resin composition product is not formed as the film-like ultraviolet curable resin composition product but the ultraviolet curable resin composition product is directly.attached to one substrate (e.g. disc substrate 11) is used, since the ultraviolet curable resin composition product that has been thermally crosslinked in advance has a proper strength, the amount of splashed resins can decrease.

FIG. 5 shows an embodiment of a manufacturing process of this case. FIG. 5 shows manufacturing processes for attaching the tacky adhesive layer 14 composed of the ultraviolet curable resin composition product to the side of the disc substrate 11.

First, as shown in FIG. 5A, various kinds of raw materials 14X, 14Y, 14Z are put into a vessel and stirred by stirring blades as shown by arrows.

Next, as shown in FIG. 5B, liquid into which the raw materials were mixed is heated and thermally crosslinked to thereby manufacture the tacky adhesive agent 14 that is placed in the half-caked state. In FIG. 5B, the raw materials are heated through the liquid (e.g. water or oil) and the vessel that contains therein the liquid of the mixed raw materials is rotated within a liquid tank as shown by arrows.

Subsequently, as shown in FIG. 5C, the tacky adhesive 14A that has been heat-treated is supplied to the heating head and is thereby coated on the disc substrate 11.

In this manner, there is obtained a substrate 24 in which the tacky adhesive layer 14 was coated on the disc substrate 11 as shown in FIG. 5D.

Other embodiments of the manufacturing process in this case are shown in FIGS. 6 to 8. FIGS. 6 to 8 show the manufacturing processes for attaching the tacky adhesive layer 14 composed of the ultraviolet curable resin composition product to the side of the cover film 15.

First, FIG. 6A shows a series of processes.

The cover film 15 made of a polycarbonate resin, for example, is pulled out of a roll 37 and supplied to a backup roll 33, in which it is coated with the solvent of the adhesive of the ultraviolet curable resin composition product by a head 34.

Next, the resultant product is heat-treated and dried by a drying machine 35, whereby the ultraviolet curable resin composition product is thermally crosslinked and thereby formed as the tacky adhesive layer 14 that is placed in the half-caked state.

Then, the peel-apart sheet 31 is pulled out of the roll 32 and attached to the surface of the tacky adhesive layer.

Subsequently, the ultraviolet curable resin composition product is rewound in the state in which the cover film 15, the tacky adhesive layer 14, which is in the half-caked state, and the peel-apart sheet 31 are laminated with each other to thereby form a roll 38.

In this manner, there is obtained the roll 38 of the sheet 25 in which the peel-apart sheet 31, the tacky adhesive layer 24 in the half-caked state and the cover film 15 are laminated with each other as shown in FIG. 6B.

Then, since the ultraviolet curable resin composition product is placed in the half-caked state by thermal crosslinking, the resultant ultraviolet curable resin composition product has proper softness and strength, a distribution of thickness becomes satisfactory and accuracy of thickness can be improved.

Next, the roll 38 (in the same state as that shown in FIG. 6B) shown in FIG. 7B is cut at predetermined widths by a suitable means such as a slit to form rolls 38A, 38B, 38C of the sheets 25 of the predetermined width.

Subsequently, the thus cut sheet 25 withdrawn from the roll 38A (38B, 38C) is punched as shown in FIG. 7C. In the case of FIG. 7C, a jig 39A on the lower side is fixed and a jig 39B on the upper side is urged against the sheet 25 as shown by an arrow.

Thus, a through-hole 26 is bored through the central portion of the optical disc by punching and notches 27 are formed at the portions of the outer peripheral portions of the optical disc by half-cutting.

Next, as shown in FIG. 8A, an unnecessary portion, i.e. refuse 28 is removed from the sheet 25. This refuse 28 is composed of the tacky adhesive layer 14 and the cover film 15 of the unnecessary portion of the outside of the optical disc and can be peeled from the sheet at the portion of the notch 27.

Thus, the lamination body of the tacky adhesive layer 14 and the cover film 15 of the optical disc shape having the through-hole 26 at the center are left on the peel-apart sheet 31.

FIG. 8B shows the ultraviolet curable resin composition product in the shape of the roll obtained after the refuse 28 had been removed.

Further, a substrate 29 composed of the tacky adhesive layer 14 and the cover film 15 is obtained by removing the peel-apart sheet 31 from the ultraviolet curable resin composition product as shown in FIG. 8C.

Inventive examples in which ultraviolet curable resin composition products according to the present invention had been manufactured in actual practice will be described below.

### (INVENTIVE EXAMPLE 1)

| | |
|---|---|
| butyl acrylate | 28.2 parts by weight |
| acrylic acid | 1.5 parts by weight |
| 2-hydroxyethyl methacrylate | 0.3 parts by weight |
| azobisisobutylonitrile | 0.03 parts by weight |
| ethyl acetate | 70 parts by weight |

The above-mentioned compound was heated at 80°C for 8 hours and refluxed to obtain acrylic based resin solution containing hydroxyl group and carboxyl group having weight-average molecular weight of 500000 and solid content of 30%.

After the thus obtained acrylic based resin solution has been cooled up to room temperature, 0.5 parts by weight of methacryloiloxyethyl isocyanate was added to 100 parts by weight of acrylic based resin solution and stirred for an hour to produce acrylic based resin solution having double bond at its side chain.

2 parts by weight of 1-hydroxy cyclohexyl phenyl ketone and 1.0 parts by weight of an isocyanate based crosslinking agent (manufactured by Nippon Polyurethane Industry Co. Ltd., under the trade name of "COLONATE L") were added to 100 parts by weight of this resin solution as a photopolymerization initiator and a thermal crosslinking agent and were mixed uniformly to produce tacky adhesive solution.

This solution was coated on a 38 *µ*m-thick polyester film thus treated by silicon so as to have a thickness of 100 *µ*m and dried at 80°C for 5 minutes by an electric oven to produce a 30 *µ*m-thick film. This film was obtained as the tacky adhesive film of the inventive example 1.

### (INVENTIVE EXAMPLE 2)

A tacky adhesive solution in which 2 parts by weight of 1, 6-hexanediol acrylate was added to 100 parts by weight of the tacky adhesive solution, which had been obtained similarly to the inventive example 1, as an acrylic oligomer component was manufactured and formed as a film-like ultraviolet curable resin composition product by a method similar to that of the inventive example 1. This film-like ultraviolet curable resin composition product was used as the tacky adhesive film of the inventive example 2. *(Comparative example 1)*

After the acrylic based resin solution containing the hydroxyl group and the carboxyl group obtained similarly to the inventive example 1 has been cooled up to room temperature, 0.3 parts by weight of the isocyanate based crosslinking agent (manufactured by Nippon Polyurethan Industry Co. Ltd., under the trade name of "COLONATE L") was added to 100 parts by weight of this acrylic based resin solution as the thermal crosslinking agent and were mixed uniformly to produce adhesive solution.

This solution was treated by the similar method to that of the inventive example 1 to obtain a 30 *µ*m-thick tacky adhesive film, and this tacky adhesive film was used as a tacky adhesive film of the comparative example 1.

### (COMPARATIVE EXAMPLE 2)

Similarly to the inventive example 1, 2 parts by weight of 1-hydroxycyclohexylphenyl ketone was added to 100 parts by Weight of acrylic based resin solution having double bond at its side chain as the photopolymerization initiator and mixed uniformly to obtain tacky adhesive solution.

This solution was treated by the similar method to that of the inventive example 1 to form a film to thereby obtain a 30 *µ*m-thick tacky adhesive film and this tacky adhesive film was used as a tacky adhesive film of the comparative example 2.

Arrangements and components of the above-mentioned inventive examples and comparative examples are collectively shown on a table 2.

**TABLE 2**

| | Acrylic based resin | Introduction of double bond into polymer | Photopolymerization initiator | Thermal crosslinking agent | Acrylic oligomer component |
|---|---|---|---|---|---|
| Inventive example 1 | Used | Introduced | Used | Used | - |
| Inventive example 2 | Used | Introduced | Used | Used | Used |
| Comparative example 1 | Used | - | - | Used | - |
| Comparative example 2 | Used | introduced | Used | - | - |

### [Evaluation test]

By the similar method to the aforementioned method, adhesive strength (180° peel strength) and holding power obtained before and after the ultraviolet curable resin is cured were respectively measured from the tacky adhesive films obtained from the above-mentioned inventive examples and the comparative examples. In any of the measurements, immediately after the tacky adhesive films had been bonded to the acrylic plate or the glass plate, the tacky adhesive films were irradiated with ultraviolet rays and adhesive strength and holding power were respectively measured from the resultant tacky adhesive films an hour later. The condition of this illumination of ultraviolet rays was such that ultraviolet rays of 1.0J/cm² were irradiated on the tacky adhesive surface of the film by using a metal halide lamp.

Measured results are shown on the table 3.

**TABLE 3**

| | Peel strength [kg weight/2 cm] | | Holding power | | Satisfactory |
|---|---|---|---|---|---|
| | Before being cured (before being irradiated by UV rays | After being cured (after being irradiated by UV rays | Before being cured (before being irradiated by UV rays | After being cured (after being irradiated by UV rays | Or Unsatisfactory |
| Inventive example 1 | 0.8 | 0.9 | 2 mm | 0 mm | Satisfactory |
| Inventive example 2 | 0.8 | 0.9 | Fell 30 minutes later | 0 mm | Satisfactory |
| Comparative example 1 | 0.8 | - | 5 mm | - | Unsatisfactory |
| Comparative example 2 | 0.8 | 0.9 | fell 10 minutes later | 0 mm | Satisfactory |

From the table 3, it is to be understood that satisfactory results of peel strength and holding power could be obtained from the inventive examples 1 and 2.

Since on the other hand the tacky adhesive film of the comparative example 1 does not contain the photopolymerization initiator and the acrylic based resin having the isocyanate group, it cannot be cured after it has been irradiated with ultraviolet rays. Therefore, the peel strength and the holding power of the tacky adhesive film of this comparative example cannot be measured because it was not cured.

Moreover, since the tacky adhesive film of the comparative example 2 does not contain the thermal crosslinking agent, its holding power obtained before it is not cured was unsatisfactory.

When the tacky adhesive film of the comparative example 1 was used as the material comprising the optical disc 10 shown in FIG. 1 in actual practice, the two substrates could not be bonded/fixed and held stably. Moreover, since this tacky adhesive film had very large elasticity so that bubbles were left in the boundary surface between the tacky adhesive agent and the substrate.

Further, the outward appearances of the tacky adhesive films were observed after a load of 25g/cm² has been applied to the tacky adhesive films of the inventive example I to the comparative example 2 and these tacky adhesive films have been left at 70°C for 20 hours (after they have been treated by pressure aging). Results obtained from these observations are shown on a table 4.

**TABLE4**

| | Outward appearance obtained after treated By pressure aging | Observed results |
|---|---|---|
| Inventive example 1 | Not changed | Satisfactory |
| Inventive example 2 | Not changed | Satisfactory |
| Comparative example 1 | Not changed | Satisfactory |
| Comparative example 2 | Wobbling produced in tacky adhesive | Unsatisfactory |

A study of the table 4 reveals that the outward appearances of the tacky adhesive films of the inventive examples 1 and 2 were not changed after the pressure aging and that satisfactory results could be obtained.

On the other hand, it is to be understood that, in the tacky adhesive film of the comparative example 2, wobbling was produced in the tacky adhesive agent after the pressure aging so that the stability of the tacky adhesive agent was not satisfactory.

A table 5 shows results obtained when tensile breaking elongation, tensile breaking elongation, tensile elastic modulus and yield strength of the tacky adhesive films of the inventive example 1 and the comparative example 2 were measured by the method shown in FIG. 13.

**TABLE 5**

| | Curing by ultraviolet rays | Tensile breaking elongation [%] | Tensile breaking strength [kg weight/cm2) | Tensile elastic modulus [kg weight/cm2] | Yield strength [g weight/cm2] |
|---|---|---|---|---|---|
| Inventive example 1 | Before being Cured | 1790 | 9.8 | 1.9 | 4.8 |
| | After being cured | 539 | 5.3 | 2.2 | 7.2 |
| Comparative example 2 | Before being Cured | > 10000 | - | 1.6 | 3.2 |
| | After being cured | 840 | 4.0 | 1.8 | 5.0 |

From the table 5, it is to be understood that the tacky adhesive film of the inventive example 1 had large strength, small tensile breaking elongation and satisfactory results after it has been cured.

On the other hand, a study of this table reveals that the tacky adhesive film of the comparative example 2 had very large tensile breaking elongation before it is being cured because the tacky adhesive film of this comparative example does not contain the thermal crosslinking agent.

From the above-mentioned results, it is to be understood that the tacky adhesive film of the inventive example 1 that contains the three components of the acrylic based resin, the photopolymerization initiator and the thermal crosslinking agent had the satisfactory results and that the tacky adhesive film of the inventive example 2 that further contains the acryl oligomer component in addition to the above-mentioned three components also had the satisfactory results.

In the present invention, so long as the optical disc is composed of a plurality of substrates bonded with a tacky adhesive layer, an arrangement of a recording layer of the optical disc is not limited in particular.

For example, of the two substrates bonded with the tacky adhesive layer, the recording layer can be formed on at least one of the two substrates by forming grooves (including the above-mentioned pre-grooves) or pits on the surface at which this substrate contacts with the tacky adhesive layer.

The present invention is not limited to the above-mentioned embodiments and can take various modifications without departing from the gist of the present invention.

According to the above-mentioned present invention, since the ultraviolet curable resin composition product is crosslinked by thermal crosslinking and ultraviolet crosslinking, the resultant tacky adhesive layer may have the three-dimensional network structure, and hence the bonded substrates can be fixed and held highly reliably.

Therefore, the optical disc becomes difficult to be affected by the slide stress, also becomes difficult to absorb moisture and the amount in which the optical disc is warped due to the absorption of moisture also can be decreased.

Accordingly, the optical disc can become highly reliable.

Moreover, according to the optical disc manufacturing method of the present invention, since the ultraviolet curable resin composition product is half-cured by thermal crosslinking before it is cured by irradiation of ultraviolet rays, the ultraviolet curable resin is crosslinked at its portion other than the portion having the double bond at its side chain and hence has proper softness and proper strength before it is cured. Then, when the ultraviolet curable resin composition product is crosslinked by thermal crosslinking, the solvent is removed from the ultraviolet curable resin composition product.

As a result, the accuracy of the thickness of the ultraviolet curable resin composition product can be increased and the substrates can be bonded together easily and stably. Moreover, when the substrates are bonded together, the resin can be prevented from being splashed and a smell of the ultraviolet curable resin composition product can be alleviated. Further, the ultraviolet curable resin composition product can be less contracted after it has been cured with irradiation of ultraviolet rays, and the amount in which the ultraviolet curable resin composition produce is contracted after it has been cured with irradiation of ultraviolet rays can be decreased. Furthermore, the amount in which the ultraviolet curable resin composition is warped when it is contracted can be decreased, and hence it becomes possible to avoid bubbles from being produced in the ultraviolet curable resin composition product when it is cured.

Accordingly, work efficiency in the manufacturing process can be made satisfactory, and hence the highly-reliable optical disc can be manufactured.

In particular, when the ultraviolet curable resin composition product is processed such that both sides of the ultraviolet curable resin composition product are sandwiched by the peel-apart films, the ultraviolet curable resin composition product is attached to one substrate after the peel-apart film of one side has been peeled and the other substrate is bonded to one substrate after the peel-apart film of the other side has been peeled so that the optical disc may be manufactured, since both ends of the ultraviolet curable resin composition product are sandwiched by the peel-apart films so that the ultraviolet curable resin composition product is previously formed as the dry film and the solvent is removed from the ultraviolet curable resin, a smell of the ultraviolet curable resin composition product can be alleviated, and the amount in which the ultraviolet curable resin composition product is contracted after the two substrates have been bonded together can be decreased. Furthermore, the accuracy of the thickness of the ultraviolet curable resin composition product can be increased.

Therefore, the optical disc can be made more reliable and work efficiency can be improved more.

## Claims

1. In an optical disc in which at least two substrates are bonded together with a tacky adhesive layer, said optical disc **characterized in that** said tacky adhesive layer is composed of a film which results from curing an ultraviolet curable resin composition product containing an acrylic resin having double bond at its side chain, a phoropolymerization initiator and a thermal crossslinking agent by thermal crosslinking and ultraviolet crosslinking.

2. An optical disc according to claim 1, wherein a substrate with a recording layer formed thereon and a film-like transparent substrate are bonded together with said tacky adhesive layer.

3. An optical disc according to claim 1, wherein said ultraviolet curable resin composition product contains 0.1 to 5 parts by weight of said photopolymerization initiator and 0.1 to 5 parts by weight of said thermal crosslinking agent with respect to 100 parts by weight of said acrylic resin.

4. An optical disc according to claim 1, wherein said acrylic resin having the double bond at its side chain is obtained by reacting 0.1 to 20 parts by weight of more than one kind selected from acrylic acid ester containing isocyanate group and methacrylic acid ester containing isocynanate group with 100 parts by weight of resin (C) which results from copolymerizing 0.1 to 20 parts by weight of monomer (B) of more than one kind selected from monomers containing at least hydroxyl group or carboxyl group to 100 parts by weight of monomer (A) whose main component is more than one kind (D) selected from acrylic acid ester and methacrylic acid ester.

5. In a method for manufacturing an optical disc in which at least two substrates are bonded together with a tacky adhesive layer, said optical disc manufacturing method comprising:
a process for half-curing an ultraviolet curable resin composition product containing acrylic resin having a double bond at its side chain, a photopolymerization initiator and a thermal crosslinking agent by thermal crosslinking;
a process for attaching the thus half-cured ultraviolet curable resin composition product to one substrate; and
a process for forming said tacky adhesive layer for bonding said one substrate and said other substrate by curing said ultraviolet curable resin composition product by ultraviolet crosslinking using irradiation of ultraviolet rays.

6. An optical disc manufacturing method according to claim 5, wherein said ultraviolet curable resin composition product is processed such that both ends of said ultraviolet curable resin composition product are sandwiched by peel-apart films, said ultraviolet curable resin composition product is attached to said one substrate after said peel-apart film of one side has been peeled and said other substrate is bonded to said one substrate after said peel-apart film of the other side has been peeled.
